# FASCICULE DE BREVET EUROPEEN

(11) **EP 2 178 746 B1**
(45) Date de publication et mention de la délivrance du brevet: **05.09.2012**
(21) Numéro de dépôt: 08805566.0
(22) Date de dépôt: 13.05.2008
(51) Int. Cl.: B64C 1/26

(54) **ELEMENT STRUCTURAL D'AERONEF SITUE A L'INTERFACE ENTRE UNE AILE ET LE FUSELAGE**
AN DER SCHNITTSTELLE ZWISCHEN EINEM FLÜGEL UND DEM RUMPF EINES FLUGZEUGS POSITIONIERTES STRUKTURELEMENT
AIRCRAFT STRUCTURAL ELEMENT LOCATED AT THE INTERFACE BETWEEN A WING AND THE FUSELAGE

(30) Priorité: 23.05.2007 FR 0755228
(43) Date de publication de la demande: 28.04.2010
(73) Titulaire: AIRBUS OPERATIONS, 31060 Toulouse (FR)
(72) Inventeur: LAFLY, Anne-Laure, F-31200 Toulouse (FR); BATALLA, Franck, F-31100 Toulouse (FR); LEMAN, Henri, F-31200 Toulouse (FR)
(74) Mandataire: Lepelletier-Beaufond, François
(86) Numéro de dépôt international: PCT/FR2008/000662
(87) Numéro de publication internationale: WO 2008/152248

(56) Documents cités:
- WO-A-98/58759
- US-A1- 2006 054 666
- NIU, MICHAEL C. Y.: "Airframe Structural Design" février 2002 (2002-02), HONG KONG CONMILIT PRESS, LTD. , HONG KONG , XP002461437 2nd edition, ISBN 962-7128-09-0 page 283; figures 8.6.3(a),(b)

## Description

L'invention se rapporte à des éléments structuraux métalliques appartenant au caisson central de voilure d'un avion et plus particulièrement à une structure et à un procédé de fabrication et d'assemblage d'un tel élément.

On sait qu'un avion comporte classiquement un fuselage et deux ailes symétriques opposées qui sont montées et fixées sur ce fuselage. La jonction de chacune de ces ailes au fuselage est assurée par l'intermédiaire d'un caisson central de voilure disposé à l'intérieur du fuselage sur toute sa largeur. Ce caisson comporte généralement un panneau extrados et un panneau intrados parallèles l'un à l'autre et qui absorbent les efforts de portance engendrés par les ailes durant le vol. Ces deux panneaux sont fixés l'un à l'autre grâce à deux longerons avant et arrière qui absorbent également une partie des efforts de portance.

A l'interface du caisson central de voilure et de chaque aile, se trouve un élément structural qui est classiquement réalisé en alliage d'aluminium. Il se compose d'un voile plan s'étendant verticalement et est encadré sur ses quatre côtés, par quatre éléments profilés supérieur, inférieur, avant et arrière.

Le voile plan comporte classiquement plusieurs raidisseurs verticaux qui améliorent la résistance de l'élément structural aux sollicitations mécaniques importantes qu'il doit supporter.

L'élément profilé supérieur de l'élément structural est raccordé au panneau extrados du caisson central de voilure et à la peau extrados de l'aile. L'élément profilé intérieur de l'élément structural est raccordé au panneau intrados du caisson central de voilure et à la peau intrados de l'aile. L'élément profilé avant de l'élément structural est raccordé au longeron avant du caisson central de voilure et à l'avant de l'aile. Enfin, l'élément profilé arrière de l'élément structural est raccordé au longeron arrière du caisson central de voilure et à l'arrière de l'aile.

Un tel élément structural peut être obtenu à partir de différents éléments assemblés les uns aux autres par des jonctions entièrement boulonnées ou rivetées, ce qui induit la présence de nombreuses zones de recouvrement. Outre les risques de cisaillements des boulons ou rivets, cette architecture impose la réalisation de perçages dans les éléments à assembler pour la fixation de ces mêmes boulons ou rivets, entrainant de fait, une augmentation de la masse et une fragilisation de l'élément structural. En outre, certains problèmes inhérents à de mauvaises fixations, peuvent apparaître au cours de la période d'exploitation de l'aéronef.

Une autre solution consiste à réaliser l'élément structural à partir d'un seul et même bloc métallique usiné afin d'améliorer la résistance mécanique et de supprimer certains inconvénients dus à la présence de jonctions entre différents éléments. Cette solution décrite notamment dans la demande GB2409443 n'est pas mise en pratique à cause de son coût de revient élevé qui est dû à la quantité de métal nécessaire et aux nombreuses opérations d'usinage à réaliser.

Par ailleurs, un tel élément structural peut souffrir de problèmes de distorsions causés par les déformations subies par le bloc métallique lors de l'étape d'usinage.

Le document Airframe Structural Design (p.283) de M.C. Lin 1988/2002 Hong Kong conmilit Press, décrit une nervure située à l'interface entre la section centrale et l'aile d'un avion qui reprend l'ensemble des caractéristiques du préambule de la revendication 1.

La demande de brevet WO 98/58759 décrit un procédé de fabrication d'un élément structural d'un avion tel qu'une nervure ou un longeron, comprenant l'étape de placer au moins deux composants bout à bout et de les relier par friction malaxage.

La demande de brevet US 2006/0054666 décrit un procédé de fabrication d'un élément structural d'un avion tel qu'une nervure ou un longeron, comprenant deux parties constituées chacune d'un alliage d'aluminium différent et soudées l'une à l'autre par friction malaxage.

L'invention vise un tel élément structural à performances améliorées tout en étant simple, commode et économique à fabriquer.

A cette fin, elle propose un élément structural d'aéronef caractérisé dans la revendication 1.

L'absence de recouvrement au niveau de la jointure entre le voile et les éléments profilés périphériques procure une amélioration substantielle de la résistance mécanique de l'élément structural en assurant notamment une meilleure transmission des efforts et une diminution des distorsions.

En outre, la disparition induite des rivets ou boulons de fixation, permet d'augmenter le niveau de sécurité en supprimant les efforts de cisaillement qui s'exerçaient précédemment sur ces pièces.

Par ailleurs, la diminution de la quantité de matière nécessaire entraine un gain de masse non négligeable, de l'ordre de 5%.

Selon des caractéristiques préférées de l'élément structural :
- ledit cordon de soudure est incurvé ;
- ledit cordon de soudure est rectiligne ;
- ledit voile comporte au moins un côté sur lequel ledit cordon de soudure s'étend de façon ininterrompue sur une longueur au moins égale à 95% de la longueur dudit côté ;
- ledit élément profilé comporte, en outre d'une première ailette formant ladite partie plate, une deuxième ailette et une troisième ailette longeant chacune ladite première ailette à l'opposé dudit cordon de soudure, lesdites deuxième ailette et troisième ailette étant disposées de part et d'autre de ladite première ailette ;
- ledit élément profilé comporte en outre des dites première, deuxième et troisième ailettes, une quatrième ailette disposée à l'opposé de ladite première ailette ;
- au moins une des dites deuxième et troisième ailettes dudit élément profilé, comporte une portion dont la largeur varie régulièrement ;
- au moins une des dites deuxième et troisième ailettes dudit élément profilé, comporte une portion crénelée dont chaque créneau est constitué de deux doigts accolés ;
- au moins une des dites deuxième et troisième ailettes dudit élément profilé, comporte une portion plus étroite ;
- ledit voile comporte sur au moins une face, une portion en saillie par rapport à ladite partie plate ;
- ledit voile comporte sur chaque côté, une dite partie plate s'étendant sur toute la longueur de ce côté ;
- ledit voile est de forme globalement rectangulaire et au moins deux fois plus long que large ;
- ledit voile et ledit élément profilé sont réalisés dans un même alliage d'aluminium comportant du lithium ; et/ou
- ledit voile et ledit élément profilé sont réalisés dans des alliages d'aluminium différents.

L'exposé de l'invention sera maintenant poursuivi par la description détaillée d'un exemple préféré de réalisation, donnée ci-après à titre illustratif mais non limitatif, en référence aux dessins annexés, sur lesquels :
- la figure 1 représente une vue en perspective d'un avion sur laquelle a été illustré en trait interrompu un élément structural selon l'invention situé à l'interface entre le fuselage et une aile ;
- la figure 2 représente une vue en perspective d'un élément structural de caisson central de voilure selon l'invention ;
- la figure 3 représente une vue en élévation de l'élément structural de la figure 2 ;
- la figure 4 représente une section de cet élément structural suivant le plan IV - IV de la figure 3 ; et
- la figure 5 représente une section de cet élément structural suivant le plan V - V de la figure 3.

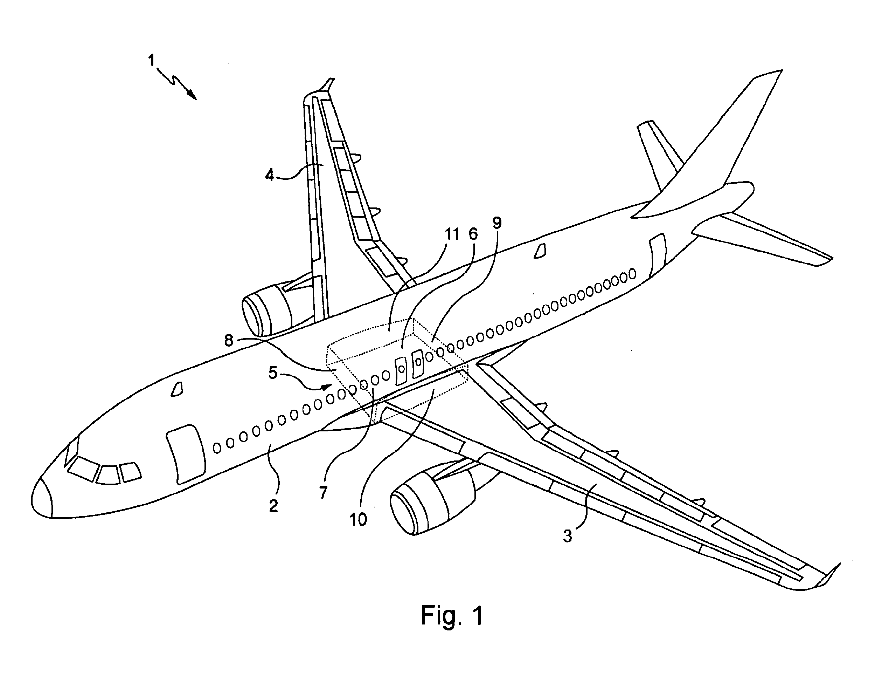

L'avion 1 illustré sur la figure 1 comporte un fuselage 2 de section globalement ovale dont saille en partie médiane, deux ailes symétriques 3 et 4. A l'intérieur du fuselage 2, un caisson central de voilure 5 permet d'assurer la fixation des ailes 3 et 4 au fuselage 2.

Le caisson 5 comporte un panneau extrados 6 et un panneau intrados 7 parallèles l'un à l'autre et orientés horizontalement. Les deux panneaux 6 et 7 sont fixés grâce à deux longerons avant 8 et arrière 9 parallèles et verticaux. Le caisson 5 comprend également à ses deux interfaces avec les ailes 3 et 4, deux éléments structuraux 10 et 11 symétriques en ce que l'élément structural 10 est fixé à l'aile 3 tandis que l'élément 11 est fixé à l'aile 4. Ces deux éléments structuraux 10 et 11 s'étendent verticalement entre les deux panneaux 6 et 7 et longitudinalement entre les deux longerons avant 8 et arrière 9.

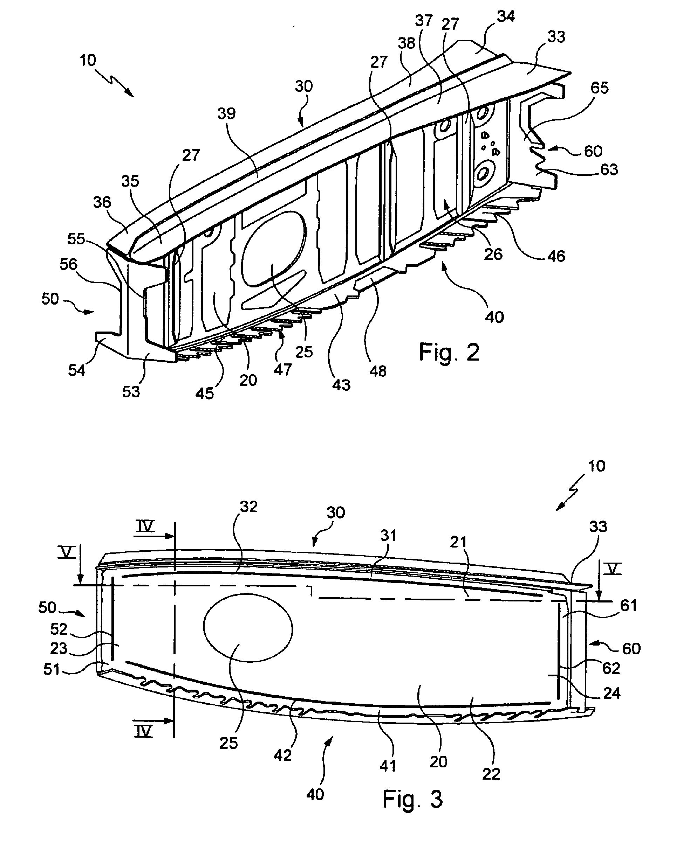

Un tel élément structural 10 va maintenant être décrit en détails à l'appui des figures 2 à 5. L'élément structural 10 comporte un voile 20 réalisé dans un alliage d'aluminium contenant du lithium. L'incorporation du lithium dont la densité est inférieure à celle de l'aluminium, procure un gain de masse de l'ordre de 5% tout en améliorant également la soudabilité et la tolérance aux dommages.

Le contour du voile 20 est globalement rectangulaire et présente deux portions rectilignes parallèles qui sont reliées par deux portions bombées vers l'extérieur. Ce voile 20 comporte en périphérie, quatre parties plates 21, 22, 23 et 24 coplanaires et qui s'étendent chacune sur toute la longueur d'un côté respectif.

Dans la suite, la partie 21 (respectivement, la partie 22) située à proximité du panneau extrados 6 (respectivement, du panneau intrados 7) est dénommée partie supérieure 21 (respectivement partie inférieure 22).

De la même manière, la partie 23 (respectivement, la partie 24) située à proximité du longeron avant 8 (respectivement, du longeron arrière 9) est dénommée partie avant 23 (respectivement partie arrière 24).

Dans le mode de réalisation préféré de l'invention, ce voile 20 présente un rapport entre longueur et largeur d'environ 4 pour 1 (voir figure 3). D'une manière plus générale, le voile 20 est au moins deux fois plus long que large.

Une ouverture ovale 25 orientée horizontalement est disposée à mihauteur du voile 20 dans sa moitié avant. Le voile 20 comporte également sur une première face 26, trois raidisseurs métalliques 27 qui s'étendent verticalement sur toute sa hauteur.

Le premier raidisseur 27 se situe à proximité de la partie avant 23, le deuxième raidisseur 27 étant disposé symétriquement par rapport au premier vis-à-vis de l'ouverture 25. Le troisième raidisseur 27 se situe quant à lui, à proximité de la partie arrière 24.

Ces trois raidisseurs 27 saillent transversalement au plan dans lequel s'étendent les quatre parties 21, 22, 23 et 24. La présence de ces raidisseurs 27 assure une meilleure résistance aux parties plates 21, 22, 23 et 24 et plus généralement au voile 20 tout entier.

La deuxième face du voile central 20 (non visible sur les dessins) présente cinq pieds de cadre métalliques qui sont disposés verticalement de part et d'autre de l'ouverture 25.

L'élément structural 10 comporte également quatre éléments 30, 40, 50 et 60 qui bordent les quatre côtés du voile 20. Dans le mode de réalisation préféré, ces éléments 30, 40, 50 et 60 sont réalisés dans le même alliage d'aluminium que le voile 20. Cependant, en fonction des contraintes et nécessités de chacun de ces éléments 30, 40, 50 et 60, ceux-ci peuvent être obtenus à partir d'alliages d'aluminium différents de celui constituant le voile 20. Cela permet d'optimiser le coût et la masse de l'élément structural 10 en choisissant pour chaque élément le constituant, le matériau le plus adéquat en fonction des contraintes et nécessités.

Le premier élément 30 qui borde le côté supérieur du voile 20, est globalement profilé suivant une direction faiblement incurvée et présente une section transversale qui varie légèrement de son extrémité avant à son extrémité arrière. L'élément profilé 30 comporte une première ailette 31 plate qui est disposée sans recouvrement dans le prolongement de la partie supérieure 21 et reliée à celle-ci par un cordon de soudure incurvé 32 bout à bout par friction malaxage. Le cordon de soudure 32 s'étend de façon ininterrompue sur une longueur au moins égale à 95 % de la longueur du côté supérieur du voile 20, sans toutefois atteindre ses deux extrémités avant et arrière.

L'élément profilé 30 comporte également une deuxième ailette 33 et une troisième ailette 34 légèrement bombées, disposées de part et d'autre de la première ailette 31. Ces ailettes 33 et 34 prennent racine tout au long de l'extrémité incurvée de l'ailette 31 située à l'opposé du cordon de soudure 32. Une quatrième ailette plate 39 est disposée dans le prolongement de la première ailette 31.

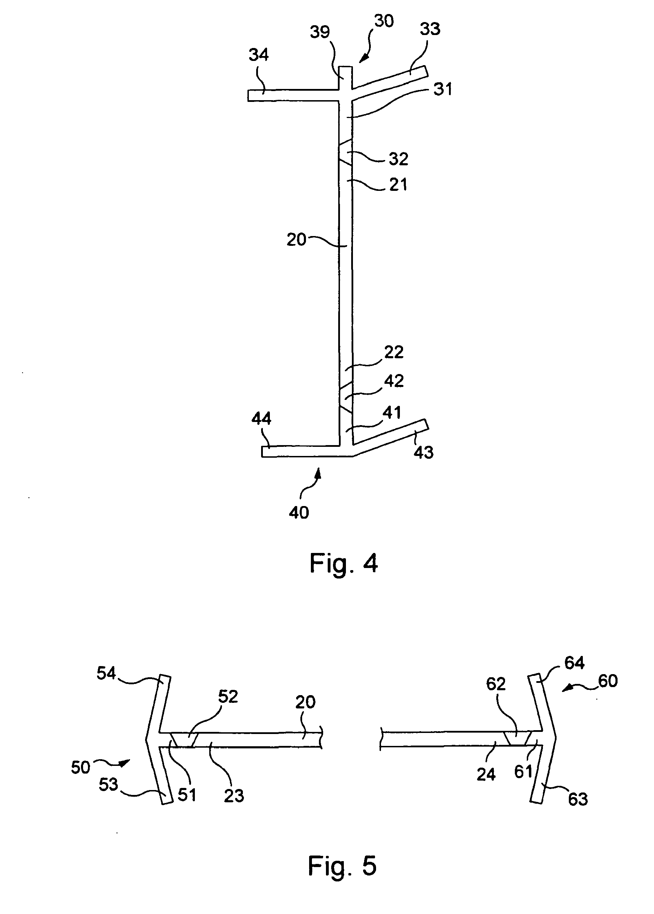

En section (voir figure 4), l'ailette 33 présente une tranche qui s'étend légèrement en oblique vers la tranche de l'ailette 39 et en direction de la peau extrados de l'aile 3 à laquelle l'ailette 33 est rattachée.

La tranche de l'ailette 34 s'étend à l'opposé de la tranche de l'ailette 33, perpendiculairement à la tranche de l'ailette 31 et en direction de l'élément structural 11.

Ce positionnement relatif des tranches appartenant aux ailettes 33 et 34 reste inchangé pour chaque section prise suivant un plan parallèle au plan IV-IV.

Comme on peut le voir sur la figure 2, l'ailette 33 comporte sur ses deux premiers tiers avant, une première portion 35 de largeur sensiblement constante (prise selon la direction du caisson central 5 vers l'aile 3). L'ailette 33 se prolonge par une seconde portion 37 dont la largeur augmente de façon régulière jusqu'à son extrémité arrière.

Globalement similaire à l'ailette 33, l'ailette 34 comporte également sur ses deux premiers tiers avant, une première portion 36 de largeur sensiblement constante (prise selon la direction du caisson central 5 vers l'aile 3). L'ailette 34 se prolonge par une seconde portion 38 dont la largeur augmente de façon régulière jusqu'à son extrémité arrière.

De largeur constante (prise selon la direction de l'élément 40 vers l'élément 30) et sensiblement équivalente à celle de l'ailette 31, l'ailette 39 présente un bord libre de même courbure que le cordon de soudure 32.

Le deuxième élément 40 qui borde le côté inférieur du voile 20, est globalement profilé suivant une direction faiblement incurvée. L'élément profilé 40 comporte une première ailette 41 plate de largeur constante (prise selon la direction de l'élément 40 vers l'élément 30) qui est disposée sans recouvrement dans le prolongement de la partie inférieure 22 et reliée à celle-ci par un cordon de soudure incurvé 42 bout à bout par friction malaxage. Le cordon de soudure 42 s'étend de façon ininterrompue sur une longueur au moins égale à 95 % de la longueur du côté inférieur du voile 20, sans toutefois atteindre ses deux extrémités avant et arrière.

L'élément profilé 40 comporte également une deuxième ailette 43 et une troisième ailette 44 bombées, disposées de part et d'autre de la première ailette 41. Ces ailettes 43 et 44 prennent racine tout au long de l'extrémité incurvée de l'ailette 41 située à l'opposé du cordon de soudure 42.

En section (voir figure 4), l'ailette 43 présente une tranche qui s'étend légèrement en oblique vers la tranche de l'ailette 41 et en direction de l'extrémité de l'aile 3.

La tranche de l'ailette 44 s'étend à l'opposé de la tranche de l'ailette 43, perpendiculairement à la tranche de l'ailette 41 et en direction de l'élément structural 11.

Ce positionnement relatif des tranches appartenant aux ailettes 43 et 44 reste inchangé pour chaque section prise suivant un plan parallèle au plan IV-IV.

Comme on peut le voir sur la figure 2, l'ailette 43 comporte deux portions avant 45 et arrière 46 crénelées. Chaque créneau 47 qui présente un contour en M est constitué de deux doigts identiques accolés. Les portions avant 45 et arrière 46 sont séparées par une portion centrale 48 présentant un bord libre globalement rectiligne entrecoupé au premier et au deuxième tiers de sa longueur par un couple de dents de scie.

Globalement similaire à l'ailette 43, l'ailette 44 (non visible sur la figure 2) comporte également deux portions avant et arrière, crénelées et dont chaque créneau qui présente un contour en M, est constitué de deux doigts identiques accolés. Ces portions crénelées facilitent la fixation de l'élément structural sur les autres composants de l'aéronef (caisson central de voilure et aile).

Le troisième élément 50 qui borde le côté avant du voile 20, est profilé suivant une direction rectiligne. L'élément profilé 50 comporte une première ailette 51 plate de largeur constante (prise selon la direction de l'élément 50 vers l'élément 60) qui est disposée sans recouvrement dans le prolongement de la partie avant 23 et reliée à celle-ci par un cordon de soudure rectiligne 52 bout à bout par friction malaxage. Le cordon de soudure 52 s'étend de façon ininterrompue sur une longueur au moins égale à 95 % de la longueur du côté avant du voile 20, sans toutefois atteindre ses deux extrémités supérieure et inférieure.

L'élément profilé 50 comporte également une deuxième ailette 53 et une troisième ailette 54, disposées de part et d'autre de la première ailette 51. Ces ailettes 53 et 54 prennent racine tout au long de l'extrémité rectiligne de l'ailette 51 située à l'opposé du cordon de soudure 52.

En section (voir figure 5), les ailettes 53 et 54 présentent des tranches formant un V très évasé tourné vers le voile 20 et dont la pointe se situe à la jonction des trois tranches des ailettes 51, 53 et 54.

La tranche de l'ailette 53 s'étend en direction de l'avant de l'aile 3 à laquelle l'ailette 53 est rattachée.

La tranche de l'ailette 54 s'étend direction du longeron avant 8 du caisson central 5 auquel l'ailette 54 est rattachée.

Ce positionnement relatif des tranches appartenant aux ailettes 53 et 54 reste inchangé pour chaque section prise suivant un plan parallèle au plan V-V.

Comme on peut le voir sur la figure 2, l'ailette 53 comporte une échancrure délimitant une portion centrale 55 plus étroite qui court sur environ les deux tiers de l'ailette 53 et présente un profil globalement rectiligne et parallèle au cordon de soudure 52.

Globalement similaire à l'ailette 53, l'ailette 54, comporte également une portion centrale 56 plus étroite qui court sur environ les deux tiers de l'ailette 54 et présente un profil globalement rectiligne et parallèle au cordon de soudure 52.

Le quatrième élément 60 qui borde le côté arrière du voile 20, est profilé suivant une direction rectiligne. L'élément profilé 60 comporte une première ailette 61 plate de largeur constante (prise selon la direction de l'élément 50 vers l'élément 60) qui est disposée sans recouvrement dans le prolongement de la partie arrière 24 et reliée à celle-ci par un cordon de soudure rectiligne 62 bout à bout par friction malaxage. Le cordon de soudure 62 s'étend de façon ininterrompue sur une longueur au moins égale à 95 % de la longueur du côté arrière du voile 20, sans toutefois atteindre ses deux extrémités supérieure et inférieure.

L'élément profilé 60 comporte également une deuxième ailette 63 et une troisième ailette 64 plates, disposées de part et d'autre de la première ailette 61. Ces ailettes 63 et 64 prennent racine tout au long de l'extrémité rectiligne de l'ailette 61 située à l'opposé du cordon de soudure 62.

En section (voir figure 5), les ailettes 63 et 64 présentent des tranches formant un V très évasé tourné vers le voile 20 et dont la pointe se situe à la jonction des trois tranches des ailettes 61, 63 et 64.

La tranche de l'ailette 63 s'étend en direction de l'arrière de l'aile 3 à laquelle l'ailette 63 est rattachée.

La tranche de l'ailette 64 s'étend en direction du longeron arrière 9 du caisson central 5 auquel l'ailette 64 est rattachée.

Ce positionnement relatif des tranches appartenant aux ailettes 63 et 64 reste inchangé pour chaque section prise suivant un plan parallèle au plan V-V.

Comme on peut le voir sur la figure 2, l'ailette 63, comporte des échancrures délimitant une portion centrale 65 plus étroite qui court sur les deux tiers de l'ailette 63 et présente un profil non homogène.

Ce profil comporte une première portion supérieure rectiligne et parallèle au cordon de soudure 62 qui se prolonge par une seconde portion en dents de scie.

Globalement similaire à l'ailette 63, l'ailette 64 (non visible sur la figure 2), comporte également une portion centrale plus étroite qui court sur les deux tiers de l'ailette 64 et présente un profil non homogène semblable à celui de la portion échancrée 65.

De préférence, les cordons de soudure incurvés 32 et 42 et les cordons de soudures rectilignes 52 et 62 suivent (ou reprennent) le contour du voile 20. Ici, ces quatre cordons 32, 42, 52 et 62 ne sont cependant pas jointifs au niveau des coins du voile 20.

Pour fabriquer un tel élément structural 10, on positionne tout d'abord chacun des quatre éléments profilés 30, 40, 50 et 60 autour du voile 20 de sorte que l'ailette 31 (respectivement 41, 51 et 61) de l'élément profilé 30 (respectivement 40, 50 et 60) se trouve dans le même plan et en relation de bout à bout avec la partie plate 21 (respectivement 22, 23 et 24) du voile 20, formant ainsi une ligne de jointure.

On soude ensemble par friction malaxage chaque élément profilé 30, 40, 50 et 60 au voile 20 le long de la ligne de jointure correspondante afin de plastifier le métal dans la zone de soudure.

Le remplacement des opérations de boulonnage ou/et rivetage par une simple opération de soudure simplifie le procédé de fabrication de l'élément structural 10 et assure une diminution non négligeable des coûts et du cycle de production.

Dans une variante non représentée, un ou plusieurs des éléments tels que 30, 40, 50 et 60 sont profilés différemment, par exemple suivant une direction rectiligne, avec les cordons de soudure tels que 32, 42, 52 et 62 qui sont également rectilignes.

Dans une autre variante non représentée, l'élément structural 10 comporte un nombre différent d'éléments profilés en périphérie du voile 20 et/ou ceux-ci présentent des formes et contours différents. Par exemple :
- l'élément structural 10 comporte uniquement deux éléments profilés supérieur tel que 30 et inférieur tel que 40 ou bien deux éléments profilés avant tel que 50 et arrière tel que 60 ; et/ou
- l'élément 10 comporte une pluralité d'éléments profilés le long d'un même côté du voile 20, par exemple disposés à intervalles réguliers le long des côtés supérieur et inférieur et comportant chacun une deuxième ailette et une troisième ailette plates disposées dans un même plan transversal à celui d'une partie plate du voile 20.

Dans encore une autre variante non représentée, le voile 20 est remplacé par un voile ayant une configuration différente. Par exemple :
- le voile tel que 20 comporte un nombre différent de raidisseurs tels que 27 et/ou de pieds de cadre et ceux-ci sont agencés suivant une disposition également distincte ; et/ou
- le voile tel que 20 est plein et ne présente donc aucune ouverture telle que 25.

## Revendications

1. Elément structural d'aéronef (1) situé à l'interface entre une aile (3) et le fuselage (2) dudit aéronef (1), comportant un voile (20) et des éléments profilés (30, 40, 50, 60) encadrant ledit voile (20), **caractérisé en ce que** ledit élément structural fait partie d'un caisson central (5) de voilure dudit aéronef (1), lequel caisson central (5) est disposé à l'intérieur dudit fuselage (2) et **en ce qu'**au moins un dit élément profilé (30, 40, 50, 60) comporte une partie plate (31, 41, 51, 61) disposée sans recouvrement dans le prolongement d'une partie plate (21, 22, 23, 24) dudit voile (20) et reliée à celle-ci par un cordon (32, 42, 52, 62) de soudure bout à bout par friction malaxage.

2. Elément selon la revendication 1, **caractérisé en ce que** ledit cordon de soudure (32, 42) est incurvé.

3. Elément selon la revendication 1, **caractérisé en ce que** ledit cordon de soudure (52, 62) est rectiligne.

4. Elément selon l'une quelconque des revendications 1 à 3, **caractérisé en ce que** ledit voile (20) comporte au moins un côté sur lequel ledit cordon de soudure (32, 42, 52, 62) s'étend de façon ininterrompue sur une longueur au moins égale à 95% de la longueur dudit côté.

5. Elément selon l'une quelconque des revendications 1 à 4, **caractérisé en ce que** ledit élément profilé (30, 40, 50, 60) comporte, en outre d'une première ailette (31, 41, 51, 61) formant ladite partie plate, une deuxième ailette (33, 43, 53, 63) et une troisième ailette (34, 44, 54, 64) longeant chacune ladite première ailette (31, 41, 51, 61) à l'opposé dudit cordon de soudure (32, 42, 52, 62), lesdites deuxième ailette (33, 43, 53, 63) et troisième ailette (34, 44, 54, 64) étant disposées de part et d'autre de ladite première ailette (31, 41,51, 25 61).

6. Elément selon la revendication 5, **caractérisé en ce que** ledit élément profilé (30) comporte en outre des dites première, deuxième et troisième ailettes (31, 33, 34), une quatrième ailette (39) disposée à l'opposé de ladite première ailette (31).

7. Elément selon l'une quelconque des revendications 5 ou 6, **caractérisé en ce qu'**au moins une des dites deuxième et troisième ailettes (33, 34) dudit élément profilé (30), comporte une portion (37, 38) dont la largeur varie régulièrement.

8. Elément selon l'une quelconque des revendications 5 ou 6, **caractérisé en ce qu'**au moins une des dites deuxième et troisième ailettes (43, 44) dudit élément profilé (40), comporte une portion crénelée (45, 46) dont chaque créneau (47) est constitué de deux doigts accolés.

9. Elément selon l'une quelconque des revendications 5 ou 6, **caractérisé en ce qu'**au moins une des dites deuxième et troisième ailettes (53, 63, 54, 64) dudit élément profilé (50, 60), comporte une portion (55, 56, 65) plus étroite.

10. Elément selon l'une quelconque des revendications 1 à 9, **caractérisé en ce que** ledit voile (20) comporte sur au moins une face, une portion (27) en saillie par rapport à ladite partie plate (21-24).

11. Elément selon l'une quelconque des revendications 1 à 10, **caractérisé en ce que** ledit voilé (20) comporte sur chaque côté, une dite partie plate (21-24) s'étendant sur toute la longueur de ce côté.

12. *Elément selon l'une quelconque des revendications 1 à 11, **caractérisé en ce que** ledit voile (20) est de forme globalement rectangulaire et au moins deux fois plus long que large.

13. Elément selon l'une quelconque des revendications 1 à 12, **caractérisé en ce que** ledit voile (20) et ledit élément profilé sont réalisés dans un même alliage d'aluminium comportant du lithium.

14. Elément selon l'une quelconque des revendications 1 à 12, **caractérisé en ce que** ledit voile (20) et ledit élément profilé sont réalisés dans des alliages d'aluminium différents.

## Claims

1. A structural member of an aircraft (1) located at the interface between a wing (3) and the fuselage (2) of said aircraft (1), comprising a web (20) and profiled section members (30, 40, 50, 60) framing said web (20), **characterized in that** said structural member forms part of a central wing box (5) of said aircraft (1), which central box (5) is disposed within said fuselage (2) and **in that** at least one said profiled section member (30, 40, 50, 60) comprises a flat part (31, 41, 51, 61) disposed without overlap in line with a flat part (21, 22, 23, 24) of said web (20) and connected thereto by a friction-stir butt weld bead (32, 42, 52, 62).

2. A member according to claim 1, **characterized in that** said weld bead (32, 42) is curved.

3. A member according to claim 1, **characterized in that** said weld bead (52, 62) is straight.

4. A member according to any one of claims 1 to 3, **characterized in that** said web (20) comprises at least one side on which the said weld bead (32, 42, 52, 62) extends without interruption over a length at least equal to 95% of the length of said side.

5. A member according to any one of claims 1 to 4, **characterized in that** said profiled section member (30, 40, 50, 60) comprises, in addition to a first fin (31, 41, 51, 61) forming said flat part, a second fin (33, 43, 53, 63) and a third fin (34, 44, 54, 64), each skirting said first fin (31, 41, 51, 61) away from said weld bead (32, 42, 52, 62), said second fin (33, 43, 53, 63) and third fin (34, 44, 54, 64) being disposed on opposite sides of said first fin (31, 41, 51, 61).

6. A member according to claim 5, **characterized in that** said profiled section member (30) comprises, in addition to said first, second and third fins (31, 33, 34), a fourth fin (39) disposed away from said first fin (31).

7. A member according to any one of claims 5 or 6, **characterized in that** at least one of said second and third fins (33, 34) of said profiled section member (30) comprises a portion (37, 38) whose width varies in regular manner.

8. A member according to any one of claims 5 or 6, **characterized in that** at least one of said second and third fins (43, 44) of said profiled section member (40), comprises a crenellated portion (45, 46), each gap (47) of which is composed of two fingers juxtaposed against each other.

9. A member according to any one of claims 5 or 6, **characterized in that** at least one of said second and third fins (53, 63, 54, 64) of said profiled section member (50, 60) comprises a narrower portion (55, 56, 65).

10. A member according to any one of claims 1 to 9, **characterized in that** said web (20) comprises, on at least one face, a portion (27) projecting relative to said flat part (21-24).

11. A member according to any one of claims 1 to 10, **characterized in that** said web (20) comprises on each side, a said flat part (21-24) extending over the entire length of that side.

12. A member according to any one of claims 1 to 11, **characterized in that** said web (20) is of substantially rectangular shape and is at least two times as long as it is wide.

13. A member according to any one of claims 1 to 12, **characterized in that** said web (20) and said profiled section member are made of the same lithium-containing aluminum alloy.

14. A member according to any one of claims 1 to 12, **characterized in that** said web (20) and said profiled section member are made of different aluminum alloys.

## Patentansprüche

1. Strukturelement eines Luftfahrzeugs (1), das an einer Schnittstelle zwischen einem Flügel (3) und dem Rumpf (2) des Luftfahrzeugs (1) gelegen ist und eine Schale (20) und Profilelemente (30, 40, 50, 60), die die Schale (20) einfassen, umfasst,
**dadurch gekennzeichnet, dass** das Strukturelement einen Teil eines zentralen Kastens (5) der Tragfläche des Luftfahrzeugs (1) bildet, wobei der zentrale Kasten (5) im Inneren des Rumpfes (2) angeordnet ist, und dass zumindest ein Profilelement (30, 40, 50, 60) einen ebenen Teil (31, 41, 51, 61) umfasst, der ohne Überlappung in der Verlängerung eines ebenen Teils (21, 22, 23, 24) der Schale (20) angeordnet und mit diesem durch eine Reibrühr-Stumpfschweißnaht (32, 42, 52, 62) verbunden ist.

2. Element nach Anspruch 1,
**dadurch gekennzeichnet, dass** die Schweißnaht (32, 42) gekrümmt ist.

3. Element nach Anspruch 1,
**dadurch gekennzeichnet, dass** die Schweißnaht (52, 62) gerade ist.

4. Element nach einem der Ansprüche 1 bis 3,
**dadurch gekennzeichnet, dass** die Schale (20) zumindest eine Seite umfasst, auf der sich die Schweißnaht (32, 42, 52, 62) auf eine ununterbrochene Weise über eine Länge von zumindest 95 % der Länge der Seite erstreckt.

5. Element nach einem der Ansprüche 1 bis 4,
**dadurch gekennzeichnet, dass** das Profilelement (30, 40, 50, 60) zudem eine erste Rippe (31, 41, 51, 61), die den ebenen Teil bildet, eine zweite Rippe (33, 43, 53, 63) und eine dritte Rippe (34, 44, 54, 64) umfasst, die jeweils entlang der ersten Rippe (31, 41, 51, 61) entgegengesetzt zu der Schweißnaht (32, 42, 52, 62) verlaufen, wobei die zweite Rippe (33, 43, 53, 63) und die dritte Rippe (34, 44, 54, 64) beiderseits der ersten Rippe (31, 41, 51, 61) angeordnet sind.

6. Element nach Anspruch 5,
**dadurch gekennzeichnet, dass** das Profilelement (30) zusätzlich zu der ersten, zweiten und dritten Rippen (31, 33, 34) eine vierte Rippe (39) umfasst, die entgegengesetzt zu der ersten Rippe (31) angeordnet ist.

7. Element nach einem der Ansprüche 5 oder 6,
**dadurch gekennzeichnet, dass** zumindest eine von der zweiten und dritten Rippen (33, 34) des Profilelements (30) einen Abschnitt (37, 38) umfasst, dessen Breite sich gleichmäßig ändert.

8. Element nach einem der Ansprüche 5 oder 6,
**dadurch gekennzeichnet, dass** zumindest eine von der zweiten und dritten Rippen (43, 44) des Profilelements (40) einen gezackten Abschnitt (45, 46) umfasst, von dem jede Zacke (47) aus zwei miteinander verbundenen Fingern gebildet ist.

9. Element nach einem der Ansprüche 5 oder 6,
**dadurch gekennzeichnet, dass** zumindest eine von der zweiten und dritten Rippen (53, 63, 54, 64) des Profilelements (50, 60) einen schmaleren Abschnitt (55, 56, 65) umfasst.

10. Element nach einem der Ansprüche 1 bis 9,
**dadurch gekennzeichnet, dass** die Schale (20) auf zumindest einer Fläche einen Abschnitt (27) umfasst, der bezüglich des ebenen Teils (21 - 24) vorsteht.

11. Element nach einem der Ansprüche 1 bis 10,
**dadurch gekennzeichnet, dass** die Schale (20) auf jeder Seite einen ebenen Teil (21 - 24) umfasst, der sich über die gesamte Länge dieser Seite erstreckt.

12. Element nach einem der Ansprüche 1 bis 11,
**dadurch gekennzeichnet, dass** die Schale (20) eine im Allgemeinen rechteckige Form aufweist und mindestens zweimal länger als breit ist.

13. Element nach einem der Ansprüche 1 bis 12,
**dadurch gekennzeichnet, dass** die Schale (20) und das Profilelement aus der gleichen Lithium enthaltenden Aluminiumlegierung realisiert sind.

14. Element nach einem der Ansprüche 1 bis 12,
**dadurch gekennzeichnet, dass** die Schale (20) und das Profilelement aus unterschiedlichen Aluminiumlegierungen realisiert sind.
